# FASCICULE DE BREVET EUROPEEN

(11) **EP 0 411 226 B1**
(45) Date de publication et mention de la délivrance du brevet: **13.04.1994**
(21) Numéro de dépôt: 89402207.8
(22) Date de dépôt: 03.08.1989
(51) Int. Cl.: H02G 3/08, H02G 3/14

(54) **Boîtier de distribution perfectionné**
Verteilungsgehäuse
Junction box

(43) Date de publication de la demande: 06.02.1991
(73) Titulaire: SAREL APPAREILLAGE ELECTRIQUE Société anonyme, F-67260 Sarre Union (FR)
(72) Inventeur: Martin, Gilbert, F-67110 Niederbronn Les Bains (FR)
(74) Mandataire: Lerner, François

(56) Documents cités:
- DE-U- 8 304 706
- FR-A- 585 055
- FR-A- 2 628 903

## Description

L'invention se rapporte à un boîtier de distribution, en particulier pour des installations électriques et électroniques, tel qu'un boîtier de dérivation ou un boîtier à borne pour le raccordement électrique de divers appareils.

Les boîtiers classiques posent souvent des problèmes liés à leur fabrication, compte-tenu du rôle qu'ils doivent remplir. En effet, dans la mesure où ils sont généralement prévus pour être fixés au mur et pour recevoir une ou plusieurs platines supports des appareils devant être mis en place dans le corps du boîtier et un couvercle de fermeture de ce dernier, les boîtiers en question comportent habituellement un nombre relativement important de pièces ayant chacune sa propre fonction, induisant par là même des coûts de fabrication élevés.

La réalisation habituellement monobloc des corps de boîter, compte-tenu des impératifs d'étanchéité, n'améliore pas la situation.

Le brevet FR-A-585 055 décrit un boîtier formé d'éléments mobiles et démontables. Ce boîtier comprend une base, des parois latérales, des arêtes pour le montage des parois, ces arêtes présentant des enchassures perpendiculaires à la base pour y ajuster les parois et des organes pour être fixées à la base, et un couvercle.

L'invention se rapporte à un boîtier de ce type présentant des caractéristiques améliorées.

A cet effet, le boîtier de distribution de l'invention comprenant :
- un fond duquel se dressent les parois latérales conformées de manière à laisser libres les coins du boîtier,
- des pièces d'angle amovibles propres à venir s'engager dans lesdits coins, sur les parois de ce même boîtier,
- et un couvercle de fermeture venant coiffer lesdites parois latérales et les pièces d'angle au niveau de la bordure d'ouverture du boîtier, se caractérise en ce que chaque pièce d'angle comprend deux rebords externes qui font saillie vers l'extérieur du boîtier au niveau respectivement de sa bordure d'ouverture et de son fond, dans lesquels rebords externes sont ménagés des orifices pour le montage de moyens de fixation du boîtier sur un support quelconque et du couvercle au boîtier, respectivement.

De préférence, le fond et les parois latérales en question seront métalliques et formés d'un seul tenant, tandis que les pièces d'angle seront en matière plastique.

Par ailleurs, compte-tenu de l'utilisation plus particulièrement envisagée pour ce type de boîtier, les pièces d'angles seront avantageusement fixées de manière étanche aux parois du boîtier sur lesquelles elles s'engagent et comprendront des rainures latérales formant glissières pour leur engagement en coulissement au niveau de la tranche de deux parois latérales dudit boîtier. Et chaque pièce d'angle comportera un rebord interne s'étendant transversalement auxdites rainures et venant porter vers l'intérieur du boîtier, sur ledit fond, auquel le rebord interne en question sera fixé par des moyens de fixation tels que vis et écrou.

De préférence, ces moyens de fixation assureront également la fixation d'une platine qui viendra reposer à cet effet sur la face du rebord interne opposée à celle en appui sur le fond du boîtier.

Comme on le constate, l'invention permet de regrouper à volonté sur un nombre réduit de pièces les fonctions essentielles que doit remplir le boîtier (fixation au mur, fixation des platines, des appareils aux platines, du couvercle,...).

Et ces pièces "à fonction multiples" sont disposées dans les angles du boîtier où elles ne gênent en aucun cas la mise en place ou le retrait des appareils. La surface d'utilisation et d'accès au boîtier reste donc maximale.

L'invention et sa mise en oeuvre apparaîtront plus clairement de la description qui va suivre faite en référence aux dessins d'accompagnement dans lesquels :
la figure 1 est une vue schématique en perspective et en éclaté du boîtier de l'invention,
la figure 2 est une vue partielle de dessus, couvercle enlevé, du boîtier illustré figure 1,
et la figure 3 est une vue en coupe selon la ligne III-III de la figure 2.

Comme il apparaît des dessins, le boîtier de l'invention repéré dans son ensembre 1 comprend un corps 2 de boîtier sensiblement parallélépipédique dont l'ouverture 20 est fermée par un couvercle fixe 3.

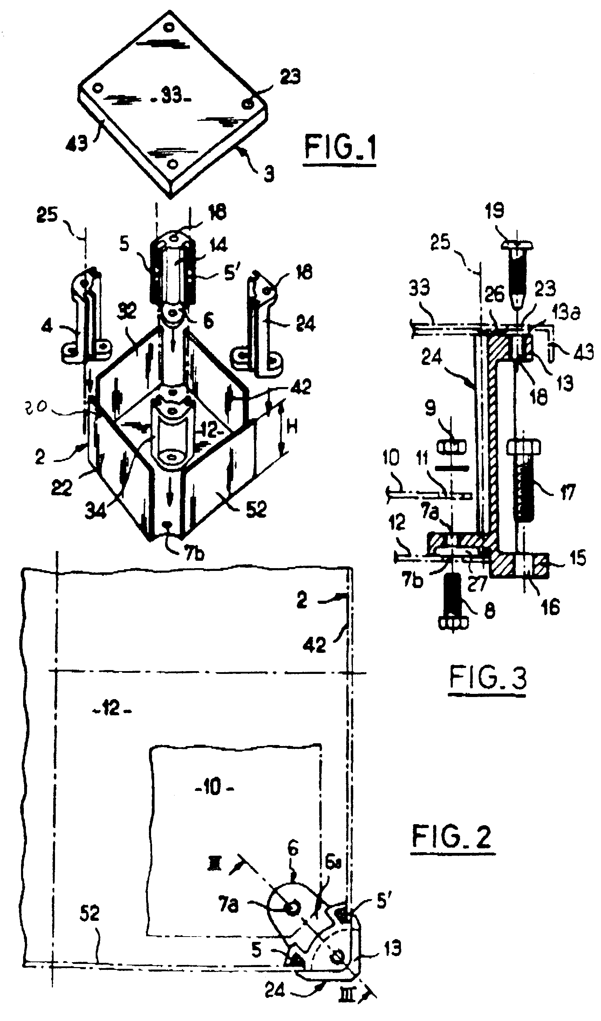

Le corps 2 comprend, tel qu'illustré plus précisément figure 1, outre le fond 12 duquel se dressent quatre parois latérales 22, 32, 42 et 52, quatre pièces d'angle 4, 14, 24, 34 montées amovibles sur le corps 2.

De préférence, le fond et les parois du boîtier seront métalliques et réalisés en une seule pièce. On pourra par exemple utiliser une tôle pliée.

En outre, comme il ressort clairement de cette figure 1, les parois latérales en question seront conformées de manière à laisser libres les quatre coins du boîtier, sur toute sa hauteur H et les pièces d'angle 4, 14, 24, 34 comporteront latéralement, de part et d'autre, des rainures longitudinales parallèles 5, 5′ (voir également figure 2) formant glissières d'engagement en coulissement des pièces au niveau de la tranche de deux parois latérales successives du boîtier (telles par exemple que celles repérées 42 et 52 à la figure 2).

Sur cette figure 2, on voit justement en vue de dessus l'une des pièces d'angle 24 en question engagée sur le corps 2 du boîtier avec ses rainures 5, 5′ qui reçoivent chacune un bord de côté des deux parois latérales 42 et 52.

De préférence et de manière que le corps du boîtier soit étanche, on prévoira d'injecter de la colle dans les rainures des pièces, assurant ainsi une liaison en étanchéité de ces pièces aux parois correspondantes du boîtier.

Ceci améliorera en outre la rigidité de l'ensemble.

On notera qu'en pratique ces pièces d'angle seront réalisées en matière plastique, tel que du polyéthylène.

On notera également que chacune des pièces d'angle en question comportera, au niveau de sa partie extrème la plus proche du fond du boîtier, un rebord 6 interne s'étendant transversalement à la direction générale 25 des rainures et venant reposer, à l'intérieur du boîtier, sur le fond 12 de ce dernier, comme on le voit illustré clairement aux figures 2 et 3.

De l'étude comparative des figures 3 et 1, il ressort par ailleurs que vers les angles et dans le fond 12 du boîtier, on a prévu des orifices 7a de telle manière qu'ils débouchent chacun dans un orifice correspondant 7b ménagé en regard dans chaque rebord interne 6.

A travers ces orifices 7a, 7b seront montés des moyens de fixation tels qu'une vis 8 et son écrou 9, lesquels assureront la fixation en position d'une platine 10 support d'un appareillage électrique, dans le cas où l'on aura prévu de monter dans le boîtier une telle platine.

Comme on le voit plus clairement à la figure 3, la platine 10 en question viendra alors porter, vers ses angles, sur la face 6a de chaque rebord interne des pièces d'angle opposée à la face de ce même rebord en appui sur le fond 12. Bien entendu, des orifices 11 adaptés auront été ménagés vers les angles de la platine 10 pour le passage des moyens 8 de fixation.

Pour une bonne étanchéité du boîtier à ce niveau on pourra prévoir de ménager dans la face de chaque rebord 6 dirigée vers le fond 12, un évidement 27 (figure 3) qui pourra être rempli de colle ou d'un autre matériau d'étanchéité.

Figures 1 et 3, on voit également que chaque pièce d'angle 4, 14, 24, 34 comprend de façon complémentaire deux rebords externes 13, 15 formés du côté de l'extrémité des pièces, respectivement proche du fond 12 et de la bordure d'ouverture 20 du boîtier, et qui font chacun saillie vers l'extérieur dudit boîtier, transversalement à la direction générale 25 des rainures 5 et 5′.

Dans chaque rebord "inférieur" 15 proche du fond 12 du boîtier est ménagé un orifice 16 pour le passage d'un moyen, tel qu'une vis ou un goujon 17, de fixation du boîtier à un support de réception quelconque, tel qu'un mur.

Quant aux rebords "supérieurs" 13 proches de l'ouverture du boîtier, ils sont conformés de manière à recevoir chacun à travers un orifice 18, une vis 19 ou analogues de fixation du couvercle 3 sur le corps 2 du boîtier. Bien entendu, des orifices 23 correspondants auront à cet effet été ménagés dans la paroi 33 d'obturation ou de fermeture du couvercle.

De préférence, ce couvercle 3 sera limité extérieurement par un bord périphérique tombé 43 qui viendra coiffer le boîtier au niveau de sa bordure 20 d'ouverture.

Toujours par souci de rendre étanche le boîtier, on pourra en outre prévoir une bande continue 26 (figure 3) souple d'étanchéité que l'on mettra en place au niveau de la face intérieure de la paroi de fermeture 33 du couvercle, de manière qu'elle vienne porter et se déformer en écrasement sous l'effet des vis 19 de fixation contre le bord 13a en regard du rebord supérieur de chacune des pièces d'angle du boîtier.

## Revendications

1. Boîtier de distribution comprenant un fond (12) duquel se dressent des parois latérales (22, 32, 42, 52) conformées de manière à laisser libres les coins du boîtier, des pièces d'angle (4, 14, 24, 34) amovibles propres à venir s'engager dans lesdits coins, sur les parois correspondantes de ce même boîtier et un couvercle (3) de fermeture venant coiffer lesdites parois latérales et les pièces d'angle, au niveau de la bordure (20) d'ouverture dudit boîtier, caractérisé en ce que chaque pièce d'angle (4, 14, 24, 34) comprend deux rebords externes (13, 15) qui font saillie vers l'extérieur du boîtier au niveau respectivement de sa bordure (20) d'ouverture et de son fond (12), dans lesquels rebords externes sont ménagés des orifices (16, 18) pour le montage de moyens (17, 19) de fixation du boîtier (1) sur un support quelconque et du couvercle (3) au boîtier, respectivement.

2. Boîtier selon la revendication 1 caractérisé en ce que le fond (12) et les parois latérales (22, 32, 42, 52) sont formés d'un seul tenant.

3. Boîtier selon la revendication 1 ou la revendication 2 caractérisé en ce que chaque pièce d'angle (4, 14, 24, 34) comprend des rainures latérales (5, 5') formant glissières pour le coulissement, dans un sens ou dans l'autre, desdites pièces au niveau de la tranche de deux parois latérales du boîtier.

4. Boîtier selon l'une quelconque des revendications précédentes caractérisé en ce que les pièces d'angle (4, 14, 24, 34) sont fixées de manière étanche aux parois latérales du boîtier sur lesquelles elles s'engagent.

5. Boîtier selon l'une quelconque des revendications précédentes caractérisé en ce que chaque pièce d'angle (4, 14, 24, 34) comporte un rebord interne (6) qui s'étend transversalement auxdites rainures (5, 5') et qui vient porter, vers l'intérieur du boîtier, sur ledit fond (12) auquel il est fixé par des moyens de fixation (8, 9).

6. Boîtier selon la revendication 5 caractérisé en ce que lesdits moyens (8, 9) de fixation utilisés assurent également la fixation d'une platine (10) qui vient reposer sur la face (6a) de chacun desdits rebords (6) opposée à celle en appui sur le fond (12) du boîtier.

## Claims

1. Junction box comprising a base (12) from which there extend lateral walls (22, 32, 42, 52) formed in such a manner as to leave the corners of the box free, removable angle pieces (4, 14, 24, 34) which are suitable for engaging in the said corners on the corresponding walls of this box, and a closing cover (3) coming to overlap the said lateral walls and the angle pieces in the vicinity of the edge (20) of the opening of the said box, characterised in that each angle piece (4, 14, 24, 34) comprises two external edges (13, 15) which project towards the exterior of the box, in the vicinity of its opening edge (20) and at its base (12) repectively, in which external edges there are provided aperture (16, 18) for the mounting of means (17, 19) for securing, respectively, the box (1) to any type of support and the cover (3) to the box.

2. Box according to claim 1, characterised in that the base (12) and the lateral walls (22, 32, 42, 52) are formed in one piece.

3. Box according to claim 1 or claim 2, characterised in that each angle piece (4, 14, 24, 34) comprises lateral grooves (5, 5') forming slides for the sliding, in one direction or the other, of the said pieces in the vicinity of the section of two lateral walls of the box.

4. Box according to any one of the preceding claims, characterised in that the angle pieces (4, 14, 24, 34) are secured in a leaktight manner on the lateral walls of the box on which walls they engage.

5. Box according to any one of the preceding claims, characterised in that each angle piece (4, 14, 24, 34) comprises an internal edge (6) which extends transversely to the said grooves (5, 5') and comes to be supported, towards the interior of the box, on the said base (12) on which it is secured by the fastening means (8,9).

6. Box according to claim 5, characterised in that the securing means (8,9) also secure a plate (10) which comes to rest on the surface (6a) of each of the said edges (6) opposite that which is supported on the base (12) of the box.

## Patentansprüche

1. Verteilungsgehäuse mit einem Boden (12), von welchem sich Seitenwände (22, 32, 42, 52) erheben, die so gebildet sind, daß sie die Ecken des Gehäuses freilassen, mit abnehmbaren Winkelstücken (4, 14, 24, 34), die geeignet sind, in den Ecken an den entsprechenden Wänden desselben Gehäuses in Eingriff zu kommen, und mit einem Verschlußdeckel (3), der die Seitenwände und die Winkelstücke an dem Öffnungsrand (20) des Gehäuses bedeckt, dadurch gekennzeichnet, daß jedes Winkelstück (4, 14, 24, 34) zwei äußere Randleisten (13, 15) aufweist, die nach außen vom Behälter bzw. von seinem Öffnungsrand (20) und seinem Boden (12) hervorspringen, wobei in den äußeren Randleisten Öffnungen (16, 18) für die Anbringung von Befestigungsmitteln (17, 19) des Behälters (1) auf irgendeiner Stütze bzw. des Deckels (3) am Behälter angeordnet sind.

2. Behälter nach Anspruch 1, dadurch gekennzeichnet, daß der Boden (12) und die Seitenwände (22, 32, 42, 52) aus einem Stück gebildet sind.

3. Behälter nach Anspruch 1 oder nach Anspruch 2, dadurch gekennzeichnet, daß jedes Winkelstück (4, 14, 24, 34) seitliche Rippen (5, 5') aufweist, die Gleitschienen für das Gleiten dieser Stücke an der Schnittfläche der zwei seitlichen Wände des Gehäuses in der einen oder anderen Richtung bilden.

4. Behälter nach einem der vorangegangenen Ansprüche, dadurch gekennzeichnet, daß die Winkelstücke (4, 14, 24, 34) in dichter Weise an den Seitenwänden des Gehäuses befestigt sind, auf weichen sie in Eingriff kommen.

5. Gehäuse nach einem der vorangegangenen Ansprüche, dadurch gekennzeichnet, daß jedes Winkelstück (4, 14, 24, 34) eine innere Randleiste (6) aufweist, die sich quer zu den Rippen (5, 5') erstreckt, und die zum Inneren des Gehäuses hin auf dem Boden (12) zu liegen kommt, auf weichem sie durch Befestigungsmittel (8, 9) befestigt ist.

6. Gehäuse nach Anspruch 5, dadurch gekennzeichnet, daß die benutzten Befestigungsmittel (8, 9) ebenfalls die Befestigung einer Platte (10) sichern, die auf der Fläche (6a) jeder der Randleisten (6) zur Auflage kommt, die derjenigen Fläche gegenüberliegt, die sich auf dem Boden (12) des Gehäuses abstützt.
